(19)

**Europäisches Patentamt**

**European Patent Office**

**Office européen des brevets**

(11) **EP 4 715 696 A1**

(12) **EUROPEAN PATENT APPLICATION**

(43) Date of publication:
25.03.2026 Bulletin 2026/13

(21) Application number: 24382997.5

(22) Date of filing: 19.09.2024

(51) International Patent Classification (IPC):
*G06Q 10/047* (2023.01)    *G06Q 50/40* (2024.01)

(52) Cooperative Patent Classification (CPC):
**G06Q 50/40; G06Q 10/047**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **The Boeing Company**
**Arlington, VA 22202 (US)**

(72) Inventors:
• **SCARLATTI JIMÉNEZ, David**
**28042 MADRID (ES)**

• **DREWS, Robin Christian**
**63263 NEU-ISENBURG (DE)**
• **BODENSOHN, David**
**63263 NEU-ISENBURG (DE)**
• **JUENGST, Maximilian Peter**
**63263 NEU-ISENBURG (DE)**
• **GÜEMES JIMÉNEZ, Alejandro**
**28042 MADRID (ES)**
• **COSTAS ÁLVAREZ, Pablo**
**28042 MADRID (ES)**

(74) Representative: **ZBM Patents - Zea, Barlocci & Markvardsen**
**Rambla de Catalunya, 123**
**08008 Barcelona (ES)**

(54) **SYSTEM AND METHOD TO MONITOR, PREDICT, AND VISUALIZE AIRSPACE CONGESTION**

(57)    A device includes a memory and one or more processors coupled to the memory. The one or more processors are configured to obtain statistics based on historical flight data for each of a plurality of historical flight paths. The historical flight paths are associated with historical flown distances between respective departure and arrival points. The one or more processors are configured to obtain an expected flown distance for an estimated flight path between a departure point and an arrival point. The one or more processors are configured to generate an airspace congestion metric associated with the estimated flight path. The airspace congestion metric is based on the expected flown distance and a set of the statistics associated with the departure and arrival points. The one or more processors are configured to output, based on the airspace congestion metric, a displayable airspace congestion indicator associated with the estimated flight path.

EP 4 715 696 A1

**Description**

## FIELD OF THE DISCLOSURE

The present disclosure is generally related to monitoring, predicting, and visualizing airspace congestion.

## BACKGROUND

Air traffic networks, particularly those associated with operation by airline carriers, can become heavily congested in particular regions and during specific time periods. Such airspace congestion can result in fewer flights during a time period and/or delays to flights already on runways, as well as causing the airline carrier to schedule flights for longer trips between departure points and arrival points. These longer trips use more fuel and more of a pilot's available flight time, and the longer trips and delays can decrease passenger satisfaction. Although some regions are served by central air navigation services, these services are not available worldwide. Additionally, central air navigation services typically monitor airline resources in terms of capacity and meeting demand, instead of the air congestion itself. Additionally, such services are typically airline carrier-specific or airport-specific, such that the monitoring services provided may not be accurate if air congestion is caused by other airline carriers or air traffic that originates or terminates in different regions. Further, air congestion services that rely on airline carrier-specific information can be slow due to privacy issues related to sharing or accessing data associated with airline travelers across different airline carriers or different regions. It is desirable to be able to monitor, predict, and visualize airspace congestion.

## SUMMARY

In a particular implementation, a device includes a memory. The device also includes one or more processors coupled to the memory. The one or more processors are configured to obtain statistics based on historical flight data for each of a plurality of historical flight paths. Each historical flight path is associated with a historical flown distance between a respective departure point and a respective arrival point. The one or more processors are configured to obtain, for an estimated flight path between a particular departure point and a particular arrival point, an expected flown distance of the estimated flight path. The one or more processors are configured to generate an airspace congestion metric associated with the estimated flight path. The airspace congestion metric is based on the expected flown distance and a set of the statistics associated with the particular departure point and the particular arrival point. The one or more processors are further configured to output, based on the airspace congestion metric, a displayable airspace congestion indicator associated with the estimated flight path.

In another particular implementation, a method includes obtaining, by one or more processors, statistics based on historical flight data for each of a plurality of historical flight paths. Each historical flight path is associated with a historical flown distance between a respective departure point and a respective arrival point. The method includes obtaining, by the one or more processors for an estimated flight path between a particular departure point and a particular arrival point, an expected flown distance of the estimated flight path. The method includes generating, by the one or more processors, an airspace congestion metric associated with the estimated flight path. The airspace congestion metric is based on the expected flown distance and a set of the statistics associated with the particular departure point and the particular arrival point. The method further includes outputting, by the one or more processors based on the airspace congestion metric, a displayable airspace congestion indicator associated with the estimated flight path.

In another particular implementation, a non-transitory, computer-readable medium stores instructions that, when executed by one or more processors, cause the one or more processors to perform operations including obtaining statistics based on historical flight data for each of a plurality of historical flight paths. Each historical flight path is associated with a historical flown distance between a respective departure point and a respective arrival point. The operations include obtaining, for an estimated flight path between a particular departure point and a particular arrival point, an expected flown distance of the estimated flight path. The operations include generating an airspace congestion metric associated with the estimated flight path. The airspace congestion metric is based on the expected flown distance and a set of the statistics associated with the particular departure point and the particular arrival point. The operations further include outputting, based on the airspace congestion metric, a displayable airspace congestion indicator associated with the estimated flight path.

The features, functions, and advantages described herein can be achieved independently in various implementations or may be combined in yet other implementations, further details of which can be found with reference to the following description, drawings, and appendix.

BRIEF DESCRIPTION OF THE DRAWINGS

FIG. 1 is a block diagram of a system configured to monitor, predict, and visualize airspace congestion.

FIG. 2 depicts an example of a graphical user interface (GUI) that is generated by the system of FIG. 1.

FIG. 3 depicts another example of a GUI that is generated by the system of FIG. 1.

FIG. 4 depicts another example of a GUI that is generated by the system of FIG. 1.

FIG. 5 is a flow chart that illustrates an example of a method of monitoring, predicting, and visualizing airspace congestion.

FIG. 6 is a flowchart illustrating an example of a life cycle of an aircraft including a navigation system configured to enable monitoring, prediction, and visualization of airspace congestion.

FIG. 7 is a block diagram of a particular implementation of the aircraft associated with the life cycle of FIG. 6.

FIG. 8 is a block diagram of a computing environment including a computing device configured to support aspects of computer-implemented methods and computer-executable program instructions (or code) according to the present disclosure.

## DETAILED DESCRIPTION

Aspects disclosed herein present a system and method of monitoring, predicting, and visualizing airspace congestion. For example, the system can analyze historical flight data of actual flown distances of previous airline flights for use in determining an airspace congestion metric that indicates a likelihood that current or future flights are delayed or scheduled for longer flight paths due to airspace congestion. The airspace congestion metric is presented to a human operator, such as an air traffic controller, a flight scheduler, or a pilot, using particular visualizations that enable the information to be quickly and easily understood, thereby enabling data-driven actions to reduce or compensate for delays due to airspace congestion. In aspects, the system supports airline carriers on the day of operations to calculate if an airspace region is congested and to predict congestion, understanding that an airspace region is congested when flights crossing the airspace region have a high probability of being delayed or heavily deviated. Air traffic networks can become heavily congested at various locations and during various time periods, which can have a significant impact on airline carrier operations. This airspace congestion can result in airline carriers scheduling longer and less cost-effective flight paths, or in some cases, the airspace congestion can result in scheduled flights being unable to take off altogether. Ground delays can also occur, causing planes to remain at departure airports until clearance for takeoff is granted. Such delays and longer flight paths can result in increased fuel and manpower usage by airline carriers and degrade passenger experience. Although central (i.e., region-specific) navigation services are available in a limited number of regions, such services are not useful on a global or multi-regional scale. Some airline carriers address these problems by focusing on monitoring and controlling capacity and demand due to airspace congestion (and other causes of delay), which can fail to address the root cause of airspace congestion.

In contrast to typical region-specific or airline-carrier specific navigation services or demand/capacity monitoring systems, aspects of the present disclosure take a different approach: instead of relying on knowledge of air traffic control staff availability or occupancy plans, historical and real-time behavior of flights is analyzed to generate an airspace congestion metric that represents actual airspace congestion for a selected flight path or area. Instead of accessing data from air navigation service providers, the system obtains publicly available global flight data and/or surveillance data (e.g., Automatic Dependent Surveillance-Broadcast (ADS-B) data), from public and third-party databases, to generate statistics associated with airspace congestion for historical flights. The system uses the statistics to generate (e.g., predict) the airspace congestion metric that represents the congestion status of airspace regions intended to be used by an airline carrier, such as to schedule flight paths through.

In some aspects, the system generates alerts for flight paths or areas that are congested (e.g., for which the airspace congestion metric exceeds one or more thresholds) or otherwise provides visualization of the airspace congestion to a human operator, such as by displaying visual indicators with different characteristics (e.g., colors, icons, flight path markers, transparency, etc.). In this manner, aspects disclosed herein support accurate and global calculation of airspace congestion using publicly available data sources instead of incomplete datasets or airline carrier-specific or region-specific datasets that can result in inaccurate predictions of airspace congestion. Particular aspects focus on deriving airspace congestion for an enroute portion between departure and arrival of each airline flight:. The enroute portion is focused on as the departure and arrival are expected to be very homogeneous since each is heavily standardized, and in situations when variability exists, most variability is due to airport congestion. However, the enroute portion of the flight is where airspace congestion introduces deviations from a preferred scheduling or flight path profile.

To illustrate such airspace congestion monitoring, prediction, and visualization functionality, the system can obtain historical flight data from one or more global or multi-regional flight databases. The historical flight data includes flown distances of flights between pairs of departure points and arrival points. As an example, a flight path between a departure point and an arrival point may not be the most direct path, but instead may avoid certain areas due to airspace restrictions, airspace congestion, weather, or the like, and thus the actual flown distance of a flight can be different than the shortest distance between the departure point and the arrival point. The system can analyze the historical flight data to determine statistics for flights between particular departure points and arrival points, and optionally for particular types of aircraft, for use in generating airspace congestion metrics. The system can also obtain an expected flown distance for an estimated flight path (e.g., a path of a flight that is in progress or that is to be scheduled in the near future, such as in a few minutes, a few hours, etc.) between a particular departure point and a particular arrival point. The system generates an airspace congestion metric based on the expected flown distance and statistics derived from the historical flight data that corresponds to the particular departure point and the particular arrival point, and optionally an aircraft type associated with the estimated flight path. Based on the airspace congestion metric, the system outputs a displayable indicator that can be displayed within a graphical user interface (GUI) to enable a human operator to quickly and clearly understand the airspace congestion predicted for the estimated flight path. For example, the displayable indicator can have one or more characteristics that are set based on the airspace congestion metric (or a comparison of the airspace congestion metric to one or more thresholds). As non-limiting examples, the characteristic(s) can include color, icon size and/or shape, flight path markings, transparency, or the like.

One benefit of the disclosed system and method is the generation of airspace congestion metrics having improved accuracy and utility as compared to output of other central navigation systems. Additionally, the airspace congestion metrics are presented to a human operator (e.g., an air traffic controller or pilot) in a clear and easily interpretable manner using particular visualizations to enable the human operator to make efficient data-driven decisions in performing actions to reduce or eliminate delays and/or to shorten the distance of airline flights. For example, instead of analyzing airline carrier resource usage and demand as is typically done by airline carriers, which can result in analytics that provide predicted changes to demand but do not monitor airspace congestion in real-time and with sufficient accuracy, aspects described herein generate an airspace congestion metric that is based on historical flight data from multiple regions (e.g., global historical flight and surveillance data) to provide accurate predictive capabilities for current airspace congestion.

The predicted airspace congestion is region and airline-carrier agnostic, thereby increasing the accuracy and utility of the prediction to the human operator. The determined airspace congestion metric is presented to the human operator as a displayable indicator which, as part of an airspace congestion and flight scheduling GUI, enables the human operator to more quickly and correctly interpret the underlying airspace congestion information, which can result in the operator taking actions that reduce, or eliminate, flight delays and/or shorten scheduled flights. Such actions can save fuel and manpower resources associated with an airline carrier in addition to increasing passenger satisfaction. The system described herein includes a distributed system that can be implemented in air traffic control computers, cloud service providers, networked servers, and client devices (including devices within aircraft) to provide air congestion monitoring, prediction, and visualization services to a variety of locations and computing devices with different computing resources. Additionally, aspects described herein improve the operation of a computer, at least by generating the airspace congestion metric and the displayable indicator faster and with less latency as compared to other central air navigation systems that are slower (e.g., have greater latency) due to more complicated processing to access private data from different airline carriers or providers and/or different regions.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

Particular implementations are described herein with reference to the drawings. In the description, common features are designated by common reference numbers throughout the drawings.

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, a system may be described herein as including one or more computing devices ("computing device(s)"), which indicates that in some implementations the system includes a single computing device and in other implementations the system includes multiple computing devices. For ease of reference herein, such features are generally introduced as "one or more" features, and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components. The term "substantially" is defined as largely but not necessarily wholly what is specified (and includes what is specified; for example, substantially 90 degrees includes 90 degrees and substantially parallel includes parallel), as understood by a person of ordinary skill in the art. In any disclosed implementations, the term "substantially" may be substituted with "within [a percentage] of" what is specified, where the percentage includes 0.1, 1, 5, or 10 percent; and the term "approximately" may be substituted with "within 10 percent of" what is specified. The statement "substantially X to Y" has the same meaning as "substantially X to substantially Y," unless indicated otherwise. Likewise, the statement "substantially X, Y, or substantially Z" has the same meaning as "substantially X, substantially Y, or substantially Z," unless indicated otherwise.

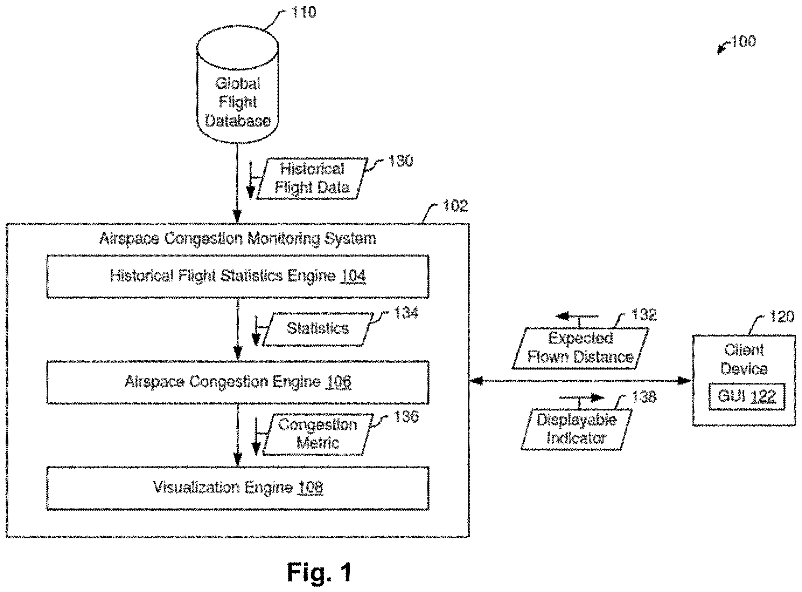

FIG. 1 is a block diagram of a system 100 that is configured to monitor, predict, and visualize airspace congestion. In the example shown in FIG. 1, the system 100 includes an airspace congestion monitoring system 102, one or more global flight databases 110, and a client device 120. The example of the system 100 shown in FIG. 1 is illustrative. It should be appreciated that in some other implementations, the system 100 omits one or more of the components shown in FIG. 1 and/or includes additional component(s) that are not shown in FIG. 1, such as additional client devices, additional databases, and/or one or more networked or cloud service devices or components.

The airspace congestion monitoring system 102 is configured to generate airspace congestion metrics for various flight paths or areas, as further described herein. In some implementations, the airspace congestion monitoring system 102 includes or corresponds to a server, desktop computing device, a laptop computing device, a personal computing device, a tablet computing device, a mobile device (e.g., a smart phone, a tablet, a personal digital assistant (PDA), a wearable device, and the like), a server, a virtual reality (VR) device, an augmented reality (AR) device, an extended reality (XR) device, a vehicle (e.g., an aircraft, or a component thereof), other computing devices, or a combination thereof, as non-limiting examples. The airspace congestion monitoring system 102 can include one or more processors, memories, and communication interfaces (not shown in FIG. 1) to support the functionality described herein. In the example shown in FIG. 1, the airspace congestion monitoring system 102 includes a historical flight statistics engine 104, an airspace congestion engine 106, and a visualization engine 108. Although illustrated as distinct components, in other implementations, one or more of the historical flight statistics engine 104, the airspace congestion engine 106, or the visualization engine 108 are combined such that a single component performs the associated functionality described herein.

The historical flight statistics engine 104 is configured to obtain one or more statistics associated with historical flights for use in predicting airspace congestion. For example, the historical flight statistics engine 104 can generate statistics 134 based on historical flight data 130 from the global flight database 110, as further described herein. The statistics relate to flown distances of historical flights (e.g., the actual distance flown of a historical flight between a departure point and an arrival point, as compared to the direct distance between the departure point and the arrival point) between pairs of departure points and arrival points worldwide, or across multiple different geographic regions. In some implementations, the historical flight statistics engine 104 is configured to obtain statistics for particular types of aircraft, in addition to statistics for a particular departure point and arrival point pair (referred to herein as a "departure/arrival pair").

The airspace congestion engine 106 is configured to generate one or more airspace congestion metrics based on statistics 134 from the historical flight statistics engine 104 and information associated with an estimated flight path, such as a flight path that is in progress of being flown or a flight path that is scheduled to be flown by an aircraft in the future. For example, the airspace congestion engine 106 can generate a congestion metric 136 based on the statistics 134 and an expected flown distance that is associated with an estimated flight path, as further described herein. The congestion metric 136 indicates an airspace congestion associated with at least a portion of the estimated flight path or an area that is between a departure point associated with the estimated flight path and an arrival point associated with the estimated flight path. In some implementations, flights (e.g., historical flights, present flights, and future/predicted flights) are divided into three distinct parts (e.g., portions or phases), each with repeatable patterns: a departure phase, an arrival phase, and an enroute phase. The time and flown distance associated with the departure phase are heavily influenced by standard airport procedures. To illustrate, depending on factors like weather conditions and runway availability, there may only be a few logical ways for a flight to depart from an airport for a given flight city pair (e.g., a departure/arrival pair).

Similar to the departure phase, the time and flown distance associated with the arrival phase are also heavily influenced by standard airport procedures. To illustrate, depending on factors like runway availability and the direction of approach, there may be only a few logical ways for a flight to arrive at an airport for a departure/arrival pair. Additionally, the arrival phase can involve delay maneuvers to increase the likelihood of, or ensure that, the rate of arrivals and departures align with the airport's capacity.

The enroute phase of the flight refers to the portion of the flight that takes place in the airspace between the departure airport and the arrival airport. For example, the enroute phase of the flight can start from the exit of an airspace management area (ASMA) at the departure airport and end at an entry of an ASMA at the arrival airport. The ASMA is typically a circular area around the airport, with a radius of 75 kilometers for a departure airport and a radius of 180 kilometers for a destination airport. Congestion in this airspace (e.g., between the ASMAs of the departure/arrival pair) can significantly impact flight routes and increase flown distance, flight duration, etc. Most airline carriers prefer to schedule a flight for an optimal flight path that minimizes the distance traveled (e.g., the flown distance or the "actual flown distance"). However, obstacles and other factors can limit the ability for a flight path to be set as an orthodromic course (i.e., a route that yields a shortest distance between two points on a globe) between the departure airport and the arrival airport. Airline carriers attempt to avoid significant deviations from a minimal distance (e.g., the orthodromic course), even when considering wind patterns that may vary cyclically throughout the year, current weather, airspace restrictions, or other factors, including air congestion. However, these factors can cause undesirable deviations from the minimal distance, resulting in increased fuel usage, increased pilot time, and increased travel time, and thus decreased passenger satisfaction, to maintain the safety of the aircraft, crew, and passengers. To reduce or eliminate deviations from the minimal distance between a departure/arrival pair, the airspace congestion engine 106 is configured to analyze historical surveillance data for enroute phases of historical flights (e.g., as indicated by the statistics 134) to compare with real-time or near real-time flight performance for the same departure/arrival pair to predict the congestion metric 136 that is representative of airspace congestion problems that can cause deviations from a desired minimal distance for flight plans between the departure/arrival pair.

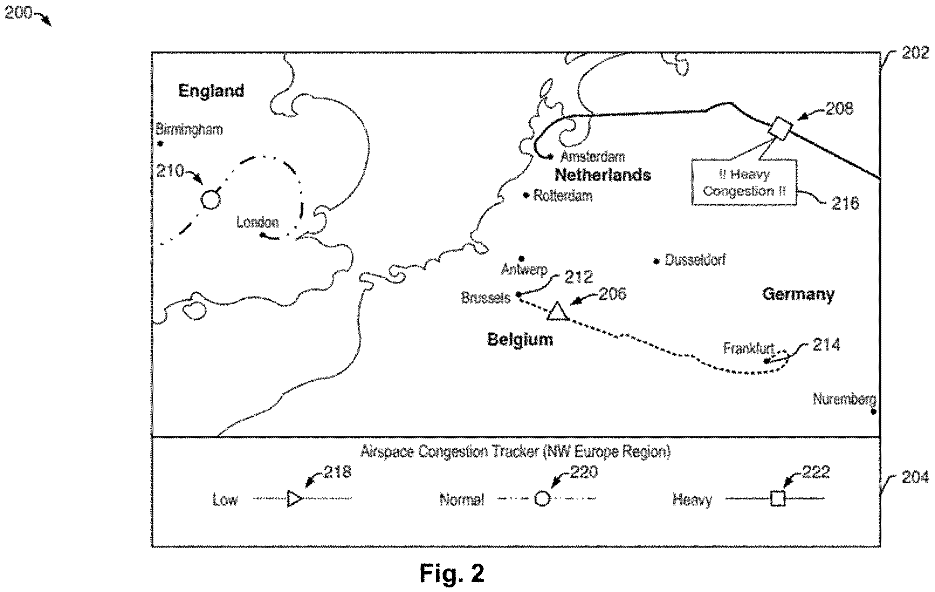

The visualization engine 108 is configured to generate information for display that represents congestion metrics or other information that is generated by the airspace congestion monitoring system 102 (e.g., the historical flight statistics engine 104 and/or the airspace congestion engine 106). For example, the visualization engine 108 is configured to output a graphical user interface (GUI) or one or more visual indicators for display within a GUI, such as a GUI 122 displayed at a client device 120, as further described herein. Examples of the GUI 122 are illustrated with reference to FIGs. 2-4.

The airspace congestion monitoring system 102 is communicatively coupled to the global flight database 110 and to the client device 120 by one or more networks. The one or more networks can include wired networks, wireless networks, or a combination thereof. For example, the one or more networks can include a Wi-Fi network, a cellular network, a satellite network, a long-range (LoRa) network, a Bluetooth network, a Zigbee network, other types of networks, or a combination thereof. The airspace congestion monitoring system 102 is configured to perform electronic communications (e.g., to receive data from, to send data to, or both) with the global flight database 110 and the client device 120 via the one or more networks.

The global flight database 110 includes one or more databases that store, or have access to, flight data from multiple regions across the world (e.g., the global flight database 110 is not a region-specific or provider-specific flight database). The global flight database 110 can include publicly available databases, such as third-party databases, government databases, flight data service provider databases, or a combination thereof, that provide flight data (e.g., global or multi-regional flight data). In some implementations, the global flight database 110 stores surveillance data of air travel during one or more historical time periods. The data stored by the global flight database 110 can be arranged according to, or processed and sorted according to, one or more characteristics of historical flights or aerial surveillance.

For example, the characteristics can include departure/arrival airport pairs, and optionally, aircraft type, associated with the historical flights.

The client device 120 is configured to communicate with the airspace congestion monitoring system 102 to enable monitoring, prediction, and display of airspace congestion metrics associated with estimated flight paths, regions, or the like. Although illustrated as a single client device 120, in other implementations, the system 100 includes multiple client devices 120 configured to communicate with the airspace congestion monitoring system 102. In some implementations, the client device 120 includes a server, desktop computing device, a laptop computing device, a personal computing device, a tablet computing device, a mobile device (e.g., a smart phone, a tablet, a PDA, a wearable device, and the like), a server, a VR device, an AR device, an XR device, other computing devices, or a combination thereof, as non-limiting examples. Alternatively, the client device 120 can include an aircraft control tower system, a flight scheduling system, or an aircraft (or a system onboard the aircraft). In implementations, the client device 120 executes an application (e.g., an airspace congestion monitoring application, a flight scheduling application, or a map application) that displays the GUI 122, such as at a display device coupled to or integrated within the client device 120. The GUI 122 can be generated and received from the airspace congestion monitoring system 102 or generated by the client device 120 based on at least some information from the airspace congestion monitoring system 102. Although displayed as separate elements in FIG. 1, in some other implementations, the operations described herein with reference to the airspace congestion monitoring system 102 and the client device 120 are performed by a single device.

During operation of the system 100, the airspace congestion monitoring system 102 obtains historical flight data 130 from the global flight database 110. The historical flight data 130 includes data for multiple historical flight paths, each of which is associated with a historical flown distance between a respective departure point and a respective arrival point (e.g., a respective departure/arrival pair). As an illustrative example, the historical flight data 130 can include flown distances of one or more historical flights from London and Amsterdam, flown distances of one or more flights from Brussels and Frankfurt, flown distances of one or more flights from Frankfurt to Brussels, flown distances of one or more flights from Brussels to Amsterdam, and flown distances of one or more flights from Brussels to London. The historical flight data 130 can indicate, for each respective historical flight, identification information, a departure point (e.g., a departure airport), an arrival point (e.g., an arrival airport), a flown distance (e.g., a distance flown during the flight that originated at the departure point and concluded at the arrival point), a flight time, an aircraft type, a passenger count, other information, or a combination thereof.

In some implementations, the airspace congestion monitoring system 102 obtains the historical flight data 130 for one or more particular departure/arrival pairs, and optionally one or more aircraft types, such as based on a departure/-arrival pair (and optionally an aircraft type) indicated by information from the client device 120. Stated another way, the airspace congestion monitoring system 102 can obtain the historical flight data 130 on an on-demand basis. Alternatively, the airspace congestion monitoring system 102 can obtain the historical flight data 130 for one or more departure/arrival pairs, and optionally one or more aircraft types, for which the airspace congestion monitoring system 102 supports the monitoring of airspace congestion. In such implementations, the obtained information can be stored at the airspace congestion monitoring system 102 or provided to the historical flight statistics engine 104 for processing.

After obtaining the historical flight data 130, the historical flight statistics engine 104 obtains the statistics 134 based on historical flight data 130. For example, the historical flight statistics engine 104 can analyze data that corresponds to a particular departure/arrival pair to generate (e.g., calculate or determine) one or more of the statistics 134 that are associated with the particular departure/arrival pair. This process can be repeated for other departure/arrival pairs to obtain departure/arrival pair-specific statistics for multiple airports across the world. As non-limiting examples, the historical flight statistics engine 104 can obtain statistics associated with flights from London to Brussels, flights from Brussels to Frankfurt, flights from Frankfurt to London, flights between other departure/arrival pairs, or a combination thereof. In some implementations, the statistics 134 include, for a particular departure point and a particular arrival point, an average flown distance of multiple historical flight paths between the particular departure point and the particular arrival point and a standard deviation of the multiple historical flight paths between the particular departure point and the particular arrival point. In other implementations, the historical flight statistics engine 104 generates the average flown distance but not the standard deviation, the standard deviation but not the average flown distance, other statistics, or a combination thereof. Although described as being obtained for departure/arrival pairs, in other implementations, the statistics 134 can be obtained by the historical flight statistics engine 104 for other parameters in addition, or in the alternative, to the departure arrival pair, such as an aircraft type, a time period, or the like.

The client device 120 provides information indicating an estimated flight path between a particular departure point and a particular arrival point to cause the airspace congestion monitoring system 102 to predict airspace congestion related to the estimated flight path. For example, the client device 120 can send an expected flown distance 132 that indicates an expected distance to be flown by an aircraft that is traversing, or to traverse, the estimated flight path. In some implementations, the expected flown distance 132 also indicates additional information, such as the particular departure point and the particular arrival point (and optionally the aircraft type). Alternatively, this information can be provided to the airspace congestion monitoring system 102 by another device or determined at the airspace congestion monitoring system 102 (e.g., based on a portion of a map being viewed, based on an identifier of a flight being scheduled, or the like).

The airspace congestion engine 106 generates the congestion metric 136 based on the expected flown distance 132 and the statistics 134. For example, the particular departure/arrival pair, and optionally other parameters such as an aircraft type, can be provided to the historical flight statistics engine 104 to generate the statistics 134 that are a set of the statistics associated with the particular departure/arrival pair. The airspace congestion engine 106 generates the congestion metric 136 (e.g., based on the statistics 134 and the expected flown distance 132) that represents the level of congestion in the airspace for the particular departure/arrival pair. This airspace congestion is based on the distance flown between ASMAs of the departure airport and the arrival airport.

In some implementations, the congestion metric 136 is generated according to Equation 1 below:

$$AC\ Metric\ =\ \frac{(betweenAirportsDistance\ -\ AVG)}{STDDEV}$$

Equation 1 – Airspace Congestion Metric

where AC Metric is the congestion metric 136, *betweenAirportsDistance* is the expected flown distance 132, AVG is the average historical flown distance associated with the departure/arrival pair, and STDDEV is the standard deviation of the historical flown distance associated with the departure/arrival pair. If the expected flown distance 132 indicates, or is sent in addition to, an aircraft type, AVG and STDDEV correspond to historical flown distances between the departure/arrival pair for aircrafts that have the same aircraft type.

The airspace congestion engine 106 can compute the congestion metric 136 in real-time or near real-time, and for estimated flight paths across multiple countries or regions (e.g., globally) to provide airspace congestion prediction and monitoring services without time consuming and potentially privacy-destroying processing of airline carrier-specific demand data. For example, the airspace congestion engine 106 can calculate the congestion metric 136 during a flight of an aircraft that has the expected flown distance 132, or prior to scheduling the flight. Thus, the congestion metric 136 represents a clear indication of airspace congestion along an estimated flight path. For example, flight paths or locations associated with a low value of the congestion metric 136 are predicted to be relatively uncongested, while flight paths or locations associated with a high value of the congestion metric 136 are predicted to be congested or highly congested. As an illustrative, non-limiting example, the congestion metric 136 is expected to have a value of as low as 1.0 for flights operating in a non-congested airspace. The value can be slightly less than zero for highly efficient flights that cover a shorter distance than the average flown distance for a respective departure/arrival pair. Conversely, the congestion metric 136 is expected to have a higher value for flights experiencing congestion in the airspace, such as a value of 30-50 or higher, indicating a growing level of congestion. In some implementations, the airspace congestion engine 106 generates area-specific or time-specific congestion metrics, such as by aggregating the congestion metric 136 of different flights between the same departure/arrival pair over a time period or by aggregating the congestion metric 136 for multiple estimated flight paths that at least partially traverse the same area.

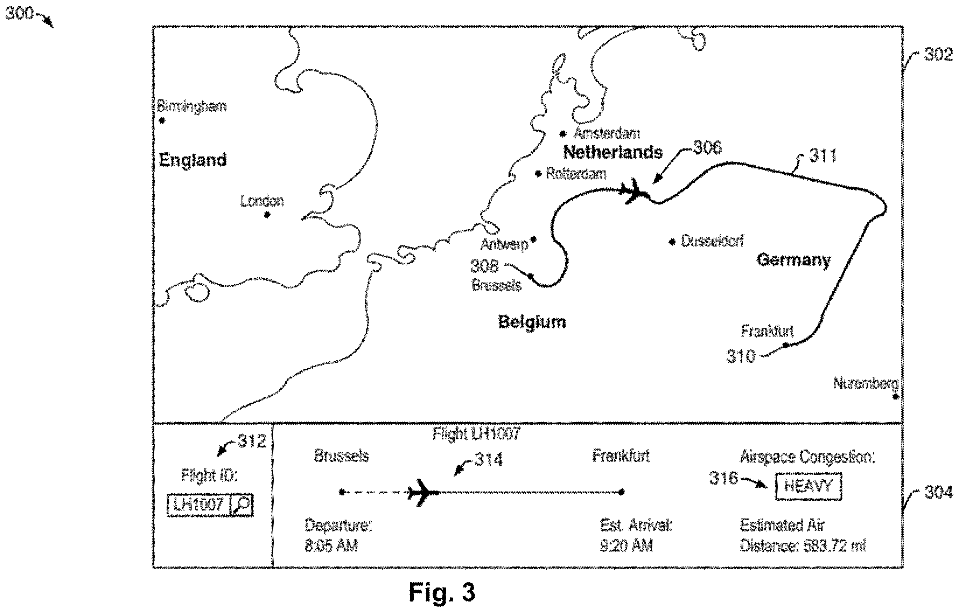

The visualization engine 108 receives the congestion metric 136 and outputs, based on the congestion metric 136, a displayable indicator 138 (e.g., a displayable airspace congestion indicator associated with the estimated flight path) that is sent to the client device 120. The displayable indicator 138 can be displayed via a display device, such as at the client device 120, to visually represent the airspace congestion prediction that underlies the congestion metric 136. In aspects, the displayable indicator 138 includes an indicator of an aircraft (e.g., along a flight path), an indicator of a flight path, an indicator of a ranking, or another type of indicator. Additionally, or alternatively, the displayable indicator 138 can include an alert, as further described herein with reference to FIG. 2. In some implementations, the displayable indicator 138 is sent to the client device 120 based on a query from a user, as further described with reference to FIG. 3. Alternatively, the airspace congestion monitoring system 102 can send the displayable indicator 138 to the client device 120 based on an indication of a portion of a map being displayed at the client device 120, an identifier of a flight that is associated with the expected flown distance 132, or the like.

In some implementations, the visualization engine 108 supports the GUI 122 for generation and display at one or more client devices, such as the client device 120. The GUI 122 can include the displayable indicator 138 overlaid on a map of one or more departure points and one or more arrival points, along with scheduling of flights, in an air traffic control display, or in another manner, to enable a user such as an air traffic controller, a flight scheduler, or a pilot to quickly and easily understand airspace congestion associated with the estimated flight path. Various examples of the GUI 122 are described further herein, with reference to FIGs. 2-4.

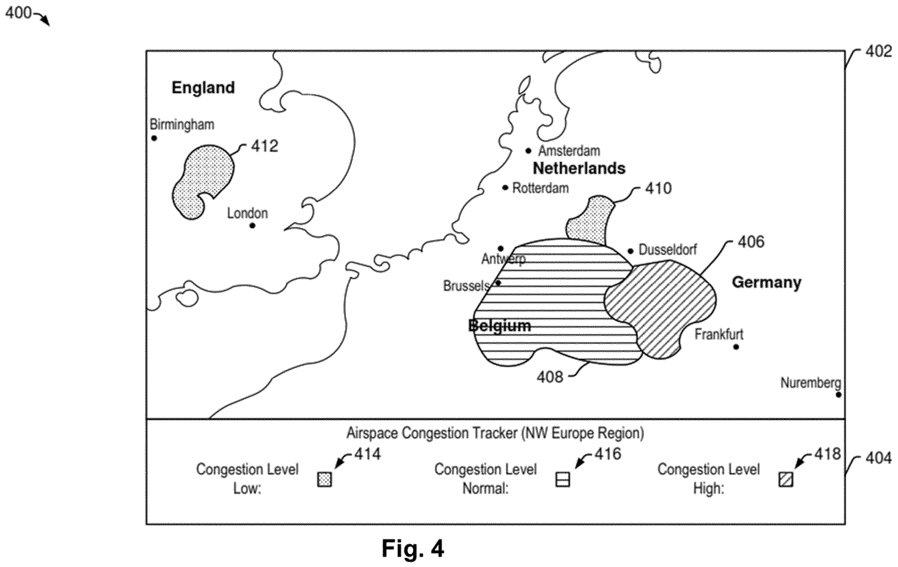

Although described above as being associated with an estimated flight path, in some other implementations, the displayable indicator 138 can be associated with a specific grouping, such as a group of departure points or arrival points, a particular area, a region, or the like. For example, the displayable indicator 138 can be associated with an area between a current location of the aircraft and the arrival point that also includes portions of other estimated flight paths. Such an example is further described herein with reference to FIG. 4.

In some implementations, the visualization engine 108 sets one or more characteristics of the displayable indicator 138 based on the congestion metric 136. For example, the visualization engine 108 can compare the congestion metric 136 to a threshold and, if the congestion metric 136 is greater than (or greater than or equal to) the threshold, a characteristic of the displayable indicator 138 is set to a first value that is different than a second value associated with the congestion metric 136 being less than or equal to (or less than) the threshold. The changeable characteristic includes color, visibility status (e.g., visible or transparent), a shape or type of icon, a path display, other characteristics, or a combination thereof. As a particular example, the visualization engine 108 can set a color of the displayable indicator to be a first color (e.g., green) if the congestion metric 136 is less than or equal to the threshold, otherwise the color can be set to a second color (e.g., red). Additionally, or alternatively, the visualization engine 108 can set a characteristic of the displayable indicator 138 based on whether the congestion metric 136 exceeds, or is within, a threshold range. As described further with reference to FIG. 4, the displayable indicator 138 can correspond to a geographic region, and the visualization engine 108 can set the characteristic based on whether a threshold number of estimated flight paths are associated with a congestion metric value that satisfies a congestion threshold. For example, if a congestion metric value of 30 or higher corresponds to high congestion (e.g., is a congestion threshold), and the threshold number of flights for a region is 4, the visualization engine 108 can set the color of the displayable indicator 138 to red if 4 or more estimated flight paths through a respective geographic region are associated with metric values that are greater than or equal to 30. Alternatively, if less than 4 estimated flight paths are associated with congestion metric values of 30 or higher, the visualization engine 108 can set the color of the displayable indicator 138 to green.

The configuration of the airspace congestion monitoring system 102, and particularly the interaction of the historical flight statistics engine 104, the airspace congestion engine 106, and the visualization engine 108, improves the accuracy and utility of airspace congestion predictions in addition to improving the speed and usability of such information to a user (e.g., an air traffic controller or pilot) through particular visualizations. For example, instead of analyzing airline carrier resource usage and demand, which can result in analytics that do not monitor airspace congestion in real-time or that can produce inaccurate predictions due to being based on airline carrier-specific or region-specific data, the airspace congestion engine 106 of the present disclosure generates the congestion metric 136 (e.g., a prediction of airspace congestion for a particular flight or region) based on historical flight data from multiple regions. In some implementations, the historical flight data is sourced from databases of globally captured flight and surveillance data that is not specific to a single airline carrier. As such, the congestion metric 136 is a more accurate prediction of airspace congestion than information provided by regionalized central air navigation services or airport-specific air traffic controllers. Additionally, the congestion metric 136 can be generated in real-time or near real-time, such as prior to or during a flight of a particular aircraft, which increases the utility of the congestion metric 136. For example, a flight scheduler, an air traffic controller, or a pilot can modify a schedule or a flight path, or take other actions, to account for or mitigate delays caused by airspace congestion.

Another benefit of the system and operations described with reference to FIG. 1 is that the visualization engine 108 generates the displayable indicator 138, that in combination with display of the GUI 122, can enable a human operator to more quickly and correctly interpret the underlying airspace congestion information (e.g., the congestion metric 136 or values derived therefrom). For example, the information can be provided via particular user-friendly visualizations that are easily and quickly interpreted by a human operator, such as displaying different levels of airspace congestion using different colors, icons, alerts, and the like, to provide the relevant information overlaid on a map of a flight path or other useful information. The above-described improved functionality can result in less delays or shorter scheduled flights due to airspace congestion, which can save fuel and manpower resources associated with an airline carrier in addition to increasing passenger satisfaction. Additionally, aspects of the system 100 provide improved operations of a computer (e.g., the airspace congestion monitoring system 102 and/or the client device 120) itself, at least because the statistics 134, the congestion metric 136, and the displayable indicator 138 are generated faster and with less latency as compared to other air navigation systems that perform more and/or slower processing operations to access private data from different airline carriers or providers.

FIGs. 2-4 depict examples of GUIs that visualize airspace congestion that is monitored and predicted according to aspects described herein. For example, the GUIs described with reference to FIGs. 2-4 may include or correspond to the GUI 122 of FIG. 1 generated by the client device 120, the airspace congestion monitoring system 102, or both. It should be appreciated that the features described with reference to the GUIs of FIGs. 2-4 are illustrative. Although illustrated and described as separate examples, features of the GUI of one of FIGs. 2-4 may be included in GUIs described with reference to the others of FIGs. 2-4. Additionally, or alternatively, one or more features of the GUIs of FIGs. 2-4 may be optional or may be omitted in other aspects of the present disclosure.

FIG. 2 depicts an example of a GUI 200 that enables monitoring, prediction, and visualization of airspace congestion. The GUI 200 includes a map portion 202 and a congestion display portion 204. The map portion 202 includes a map of a particular region or region(s) that include one or more estimated flight paths for which airspace congestion is to be predicted. For example, the map portion 202 may include a map of a portion of a country, one or more countries, or a global map of Earth. The particular region can be selected from a list of pre-defined regions; can be selected by scrolling, zooming in, zooming out; or combinations thereof. In aspects, the map portion 202 includes one or more airports, which can correspond to cities, that can be a departure point or an arrival point for one or more estimated flight paths. In the example shown in FIG. 2, the map portion 202 includes airports at London, Birmingham, Amsterdam, Rotterdam, Antwerp, Dusseldorf, Brussels, Frankfurt, and Nuremberg, within the countries of England, the Netherlands, Belgium, and Germany. This example is illustrative, and in other examples, the map portion 202 includes other airports in other countries.

The map portion 202 includes (e.g., the GUI 200 displays) one or more displayable indicators that represent airspace congestion associated with one or more estimated flight paths. These displayable indicators can be overlaid on a map depicted in the map portion 202. In the example shown in FIG. 2, the map portion 202 includes a first displayable indicator 206, a second displayable indicator 208, and a third displayable indicator 210. The first displayable indicator 206 represents airspace congestion associated with a first estimated flight path from a first departure point 212 (Brussels) to a first arrival point 214 (Frankfurt), the second displayable indicator 208 represents airspace congestion associated with a second estimated flight path from a second departure point (not shown) to a second arrival point (Amsterdam), and the third displayable indicator 210 represents airspace congestion associated with a third estimated flight path from a third departure point (London) to a third arrival point (not shown). In some implementations, the map portion 202 includes flight path indicators (e.g., the various solid and dashed lines in FIG. 2) that represent the estimated flight paths, and the displayable indicators 206-210 can be positioned at a particular location along a respective flight path indicator to represent a position of the aircraft that is traversing the estimated flight path. In such implementations, the displayable indicators 206-210 represent both an airspace congestion associated with the respective estimated flight path and a position of the respective aircraft along the respective estimated flight path.

The displayable indicators 206-210 are based on respective airspace congestion metrics determined for the respective estimated flight paths. For example, the visualization engine 108 can generate the first displayable indicator 206 based on a congestion metric associated with the first estimated flight path that is determined by the airspace congestion engine 106. The visualization engine 108 can similarly generate the displayable indicators 208 and 210 based on congestion metrics determined by the airspace congestion engine 106 for the second estimated flight path and the third estimated flight path, respectively. To represent the congestion metrics, the visualization engine 108 sets one or more characteristics of the displayable indicators 206-210 based on the respective congestion metric, or a comparison of the respective congestion metric to one or more thresholds or one or more threshold ranges.

In the example shown in FIG. 2, the one or more characteristics include an icon (e.g., an icon type or shape), and the visualization engine 108 selects the icon to represent the displayable indicators 206-210 based on comparisons of the respective congestion metrics to a first threshold and a second threshold. The congestion display portion 204 includes the various icons and indicates their relationship to the thresholds. To illustrate, the congestion display portion 204 can include a first icon 218, a second icon 220, and a third icon 222. In the example shown in FIG. 2, the first icon 218 represents low airspace congestion and corresponds to the congestion metric being less than or equal to (or less than) a first threshold, the second icon 220 represents normal airspace congestion and corresponds to the congestion metric being greater than (or greater than or equal to) the first threshold and less than or equal to (or less than) a second threshold, and the third icon 222 represents heavy airspace congestion and corresponds to the congestion metric being greater than (or greater than or equal to) the second threshold.

The visualization engine 108 selects one of the icons 218-222 for the displayable indicators 206-210 based on comparisons of the respective congestion metrics to the first and second thresholds. For example, if the first threshold is 1.0 and the second threshold is 25.0, and if the congestion metric that corresponds to the first estimated flight path is 0.4, the first displayable indicator 206 is assigned the first icon 218 based on the congestion metric being less than or equal to (or less than) the first threshold. Similarly, if the congestion metric associated with the second estimated flight path is 42.7 and the congestion metric associated with the third estimated flight path is 12.3, the third displayable indicator 210 is assigned the second icon 220 based on the respective congestion metric being greater than (or greater than or equal to) the first threshold and less than or equal to (or less than) the second threshold, and the second displayable indicator 208 is assigned the third icon 222 based on the respective congestion metric being greater than (or greater than or equal to) the second threshold. Thus, by setting each of the displayable indicators 206-210 to one of the icons 218-222, the visualization engine 108 causes the displayable indicators 206-210 to represent airspace congestion associated with the estimated flight paths in a manner that enables quick and efficient understanding by a human operator, such as an air traffic controller, a flight scheduler, or a pilot, of predicted airspace congestion related to the estimated flight path. For example, the first displayable indicator 206 indicates that airspace congestion associated with the first estimated flight path is low, the third displayable indicator 210 indicates that airspace congestion associated with the second estimated flight path is normal, and the second displayable indicator 208 indicates that airspace congestion associated with the third estimated flight path is heavy. In other implementations, the icons 218-222 are assigned based on comparisons to a single threshold or more than two thresholds, the icons 218-222 correspond to other levels of airspace congestion, or a combination thereof.

As another example, the visualization engine 108 can select one of the icons 218-222 for the displayable indicators 206-210 based on comparisons of the respective congestion metrics to a threshold range. For example, if the threshold range is 1.5 to 25.0, and if the congestion metric that corresponds to the first estimated flight path is 1.1, the first displayable indicator 206 is assigned the first icon 218 based on the congestion metric being less than the threshold range. Similarly, if the congestion metric associated with the second estimated flight path is 34.9 and the congestion metric associated with the third estimated flight path is 16.4, the third displayable indicator 210 is assigned the second icon 220 based on the respective congestion metric being within the threshold range, and the second displayable indicator 208 is assigned the third icon 222 based on the respective congestion metric being greater than (e.g., exceeding) the threshold range. In other implementations, the icons 218-222 are assigned based on comparisons to multiple threshold ranges, the icons 218-222 correspond to other levels of airspace congestion, or a combination thereof.

In some implementations, the visualization engine 108 sets other characteristics of the displayable indicators 206-210 instead of, or in addition to, the icon type. For example, the displayable indicators 206-210 can have a first color (e.g., green) if the respective airspace congestion is low, a second color (e.g., yellow) if the respective airspace congestion is normal, and a third color (e.g., red) if the respective airspace congestion is heavy. As another example, the displayable indicators 206-210 can have a first size (e.g., small) if the respective airspace congestion is low, a second size (e.g., medium) if the respective airspace congestion is normal, and a third size (e.g., large) if the respective airspace congestion is heavy. As another example, the displayable indicators 206-210 can have a first transparency (e.g., fully transparent) if the respective airspace congestion is low, a second transparency (e.g., semi-transparent) if the respective airspace congestion is normal, and a third transparency (e.g., visible or opaque) if the respective airspace congestion is heavy. In some implementations, one or more characteristics (e.g., color, size, transparency, etc.) of the flight path indicators are set to the same values as corresponding characteristics of the displayable indicator that is associated with the estimated flight path. In some implementations, one or more characteristics of the displayable indicators 206-210 and/or the flight path indicators that are controlled by the visualization engine 108 are selected based on user input.

In some implementations, one or more displayable indicators include, or are displayed together with, an alert associated with the airspace congestion represented by the displayable indicator. For example, the second displayable indicator 208 may include, or be displayed with, an alert 216 that indicates that the second estimated flight path is associated with heavy airspace congestion. The alert 216 can include an alert message and/or can identify the estimated flight path, an estimated flight plan associated with the estimated flight path, the particular departure point, the particular arrival point (e.g., Amsterdam), other information, or a combination thereof. Displaying the alert 216 can assist in focusing the human operator's attention on an estimated flight path that is associated with heavy airspace congestion (or any selected level of airspace congestion).

Although the displayable indicators 206-210 shown in FIG. 2 correspond to estimated flight paths, in some other implementations, a displayable indicator identifies an airspace grouping. The airspace grouping can include one or more departure points, one or more arrival points, a geographic region that includes at least a portion of one or more estimated flight paths, or a combination thereof. For example, instead of or in addition to displaying the second displayable indicator 208, the map portion 202 can include a displayable indicator that identifies a grouping that includes Amsterdam and one or more other departure points associated with flight paths having congestion metrics that indicate heavy congestion, one or more arrival points associated with flight paths having congestion metrics that indicate heavy congestion, a geographic region that includes at least a portion of the second estimated flight path and one or more other flight paths having congestion metrics that indicate heavy congestion, or a combination thereof. To illustrate, such a displayable indicator can be overlaid on a geographic region, as described further herein with reference to FIG. 4, or the displayable indicator can include or correspond to an alert that indicates the members of the grouping. Thus, displayable indicators included in the GUI 200 are not limited to indicators of particular flights or flight paths.

FIG. 3 depicts an example of a GUI 300 that enables monitoring, prediction, and visualization of airspace congestion. The GUI 300 includes a map portion 302 and a flight information portion 304. The map portion 302 includes a map of a particular region or region(s) that include one or more estimated flight paths for which airspace congestion is to be predicted. For example, the map portion 302 may include a map of a portion of a country, one or more countries, or a global map of Earth. In aspects, the map portion 302 includes one or more airports, which can correspond to cities, that can be a departure point or an arrival point for one or more estimated flight paths. In the example shown in FIG. 3, the map portion 302 includes airports at London, Birmingham, Amsterdam, Rotterdam, Antwerp, Dusseldorf, Brussels, Frankfurt, and Nuremberg, within the countries of England, the Netherlands, Belgium, and Germany. This example is illustrative, and in other examples, the map portion 302 includes other airports in other countries.

The map portion 302 includes (e.g., the GUI 300 displays) a displayable indicator 306 that represents a flight that is (or will be) traversing an estimated flight path associated with a query that is entered in the flight information portion 304. The displayable indicator 306 can be overlaid on a map depicted in the map portion 302. In the example shown in FIG. 3, the map portion 302 includes the displayable indicator 306 that represents a position of an aircraft that is traversing an estimated flight path from a departure point 308 (Brussels) to an arrival point 310 (Frankfurt) (e.g., Brussels and Frankfurt comprise a departure/arrival pair associated with the estimated flight path). In some implementations, the map portion 302 includes a flight path indicator 311 that represents the estimated flight path, and the displayable indicator 306 can be positioned at a particular location along the flight path indicator 311 to represent a position of the aircraft that is traversing the estimated flight path.

The displayable indicator 306 and the flight path indicator 311 correspond to a flight that is identified as a result of a query that is entered in the flight information portion 304. To illustrate, the flight information portion 304 can include a query field 312 that enables a user to search for information associated with a particular scheduled or in-progress flight by entering identification information. For example, the query field 312 can include or correspond to a search field that is configured to receive a flight identifier, or that enables querying for a particular flight in another manner. Upon entry of a flight identifier in the query field 312, information associated with the flight having the flight identifier is populated in the flight information portion 304. This information includes a flight status indicator 314 (and optionally additional flight information) associated with the flight and a displayable indicator 316 that indicates an airspace congestion associated with the flight (and optionally additional airspace congestion information). In some implementations, the flight status indicator 314 includes an aircraft icon that is positioned at a particular point along a horizontal axis that represents a portion of the estimated flight path that has been traversed. For example, if the flight status indicator 314 is positioned approximately 1/4th along the axis from a left end, the flight status indicator 314 indicates that the aircraft traversing the estimated flight path has completed approximately 25% of the estimated flight time. In some implementations, the axis can be represented using different visual characteristics (e.g., dashes, line types, line weights, colors, etc.) to indicate the completed portion and the uncompleted portion of the flight. Additionally, or alternatively, the flight information included with the flight status indicator 314 can include a departure time, an estimated arrival time, a name of the departure point, a name of the arrival point, the flight identifier, or a combination thereof.

The displayable indicator 316 is based on an airspace congestion metric determined for the estimated flight path associated with the flight identified by the query. For example, the visualization engine 108 can generate the displayable indicator 316 based on the congestion metric 136 associated with the estimated flight path that is determined by the airspace congestion engine 106. In some implementations, the displayable indicator 316 includes a word or phrase that indicates a level of airspace congestion represented by the displayable indicator 316. For example, the displayable indicator 316 can include "HEAVY" as shown in FIG. 3. In other examples, the displayable indicator 316 can include "LOW" or "NORMAL", and the word or phrase is determined based on a comparison of the congestion metric 136 to one or more thresholds or one or more threshold ranges, as described above with reference to FIG. 2. Additionally, or alternatively, to represent the congestion metric 136, the visualization engine 108 sets one or more characteristics of the displayable indicator 316 based on the congestion metric 136, or a comparison of the congestion metric 136 to one or more thresholds or one or more threshold ranges. For example, a color of the displayable indicator 316, a shape or type of the displayable indicator 316, a size of the displayable indicator 316, a transparency of the displayable indicator 316, or a combination thereof, can be set to particular value(s) if the congestion metric 136 indicates a low level of airspace congestion, a normal level of airspace congestion, or a heavy level of airspace congestion. In some implementations, one or more characteristics of the displayable indicator 316 that are controlled by the visualization engine 108 are selected based on user input. Although three levels of airspace congestion are described, in other implementations, the displayable indicator 316 represents fewer than three or more than three congestion levels, the congestion levels include different levels than low, normal, and heavy, or a combination thereof. In some implementations, the displayable indicator 316 includes or is displayed with an alert, such as the alert 216 described with reference to FIG. 2.

FIG. 4 depicts an example of a GUI 400 that enables monitoring, prediction, and visualization of airspace congestion. The GUI 400 includes a map portion 402 and a congestion display portion 404. The map portion 402 includes a map of a particular region or region(s) that include one or more geographic regions for which airspace congestion is to be predicted. For example, the map portion 402 may include a map of a portion of a country, one or more countries, or a global map of Earth. In aspects, the map portion 402 includes one or more airports, which can correspond to cities, that can be a departure point or an arrival point for one or more estimated flight paths. In the example shown in FIG. 4, the map portion 402 includes airports at London, Birmingham, Amsterdam, Rotterdam, Antwerp, Dusseldorf, Brussels, Frankfurt, and Nuremberg, within the countries of England, the Netherlands, Belgium, and Germany. This example is illustrative, and in other examples, the map portion 402 includes other airports in other countries.

The map portion 402 includes (e.g., the GUI 400 displays) one or more displayable indicators that represent airspace congestion associated with one or more geographic regions. These displayable indicators can be overlaid on a map depicted in the map portion 402. In the example shown in FIG. 4, the map portion 402 includes a first displayable indicator 406, a second displayable indicator 408, a third displayable indicator 410, and a fourth displayable indicator 412. The first displayable indicator 406 represents airspace congestion associated with a first geographic region, the second displayable indicator 408 represents airspace congestion associated with a second geographic region, the third displayable indicator 410 represents airspace congestion associated with a third geographic region, and the fourth displayable indicator 412 represents airspace congestion associated with a fourth geographic region. In some implementations, the displayable indicators 406-412 represent airspace congestion associated with geographic regions that can include portions of one or more estimated flight paths, such as the estimated flight paths described above with reference to FIGs. 2-3.

The displayable indicators 406-412 are based on respective airspace congestion metrics determined for one or more estimated flight paths within each geographic region. For example, the visualization engine 108 can generate the first displayable indicator 406 based on congestion metric(s) determined by the airspace congestion engine 106 and that are associated with one or more estimated flight paths having portions that overlap the first geographic region. The visualization engine 108 can similarly generate the displayable indicators 408-412 based on congestion metrics determined by the airspace congestion engine 106 for estimated flight paths having portions that overlap the second geographic region, the third geographic region, and the fourth geographic region, respectively. To represent the congestion metrics, the visualization engine 108 sets one or more characteristics of the displayable indicators 406-412 based on the respective congestion metric(s), or a comparison of the respective congestion metric(s) to one or more thresholds or one or more threshold ranges.

In the example shown in FIG. 4, the one or more characteristics include a color (represented by a shading in FIG. 4), and the visualization engine 108 selects the colors of the displayable indicators 406-412 based on comparisons of the respective congestion metric(s) to a first threshold and a second threshold. The congestion display portion 404 includes the various colors of the displayable indicators 406-412 and indicates their relationship to the thresholds (e.g., to airspace congestion levels). To illustrate, the congestion display portion 404 can include a first icon 414, a second icon 416, and a third icon 418. In the example shown in FIG. 4, the first icon 414 has a first color that represents low airspace congestion and corresponds to respective geographic regions including at least a threshold number of estimated flight paths having congestion metrics that are less than or equal to (or less than) a first threshold. The second icon 416 has a second color that represents normal airspace congestion and corresponds to respective geographic regions including at least the threshold number of estimated flight paths having congestion metrics that are greater than (or greater than or equal to) the first threshold and less than or equal to (or less than) a second threshold. The third icon 418 has a third color that represents heavy airspace congestion and corresponds to respective geographic regions including at least the threshold number of estimated flight paths having congestion metrics that are greater than (or greater than or equal to) the second threshold.

The visualization engine 108 selects one of the colors (e.g., of the icons 414-418) for the displayable indicators 406-412 based on comparisons of congestion metrics of the estimated flight paths included in the respective geographic regions to the first and second thresholds. For example, if the first threshold is 1.0, the second threshold is 25.0, the threshold number is 3, and if the third geographic region includes 4 estimated flight paths having congestion metrics that are less than or equal to (or less than) 1.0 and the fourth geographic region includes 3 estimated flight paths having congestion metrics that are less than or equal to (or less than) 1.0, the third displayable indicator 410 and the fourth displayable indicator 412 are assigned the first color associated with the first icon 414. Similarly, if the second geographic region includes 5 estimated flight paths having congestion metrics that are greater than (or greater than or equal to) 1.0 and less than or equal to (or less than) 25.0, the second displayable indicator 408 is assigned the second color associated with the second icon 416. Additionally, if the first geographic region includes 3 estimated flight paths having congestion metrics that are greater than (or greater than or equal to) 25.0, the first displayable indicator 406 is assigned the third color associated with the third icon 418.

Thus, by setting each of the displayable indicators 406-412 to the color of one of the icons 414-418, the visualization engine 108 causes the displayable indicators 406-412 to represent airspace congestion associated with estimated flight paths within the geographic regions in a manner that enables quick and efficient understanding by a human operator, such as an air traffic controller, a flight scheduler, or a pilot, of predicted airspace congestion related to the geographic regions. For example, the first displayable indicator 406 having the third color indicates that airspace congestion associated with the first geographic region is heavy, the second displayable indicator 408 having the second color indicates that airspace congestion associated with the second geographic region is normal, and the third displayable indicator 410 and the fourth displayable indicator 412 having the first color indicates that airspace congestion associated with the third and fourth geographic regions is low.

In other implementations, the colors are assigned based on comparisons of congestion metrics to a single threshold or more than two thresholds, the colors correspond to other levels of airspace congestion, the threshold number of estimated flight paths is less than three or more than three, or a combination thereof. As a non-limiting example, the first color (e.g., low congestion) can be assigned to geographic regions having fewer than a first threshold number of estimated flight paths with congestion metrics that satisfy a congestion threshold, the second color (e.g., normal congestion) can be assigned to geographic regions having more than the first threshold number and fewer than a second threshold number of estimated flight paths with congestion metrics that satisfy the congestion threshold, and the third color (e.g., heavy congestion) can be assigned to geographic regions having more than the second threshold number of estimated flight paths with congestion metrics that satisfy the congestion threshold.

Although the visualization engine 108 is described as setting colors based on comparisons of congestion metrics to thresholds, in some other implementations, the visualization engine 108 sets the colors of the displayable indicators 406-412 based on comparison of congestion metrics to one or more threshold ranges. Additionally, or alternatively, the visualization engine 108 can set other characteristics of the displayable indicators 406-412, such as formatting, transparency, or a combination thereof, instead of or in addition to the color of the displayable indicators 406-412 based on the above-described comparisons. In some implementations, one or more characteristics of the displayable indicators 406-412 that are controlled by the visualization engine 108 are selected based on user input. In some implementations, the displayable indicators 406-412 include or are displayed with respective alert(s), such as the alert 216 described with reference to FIG. 2.

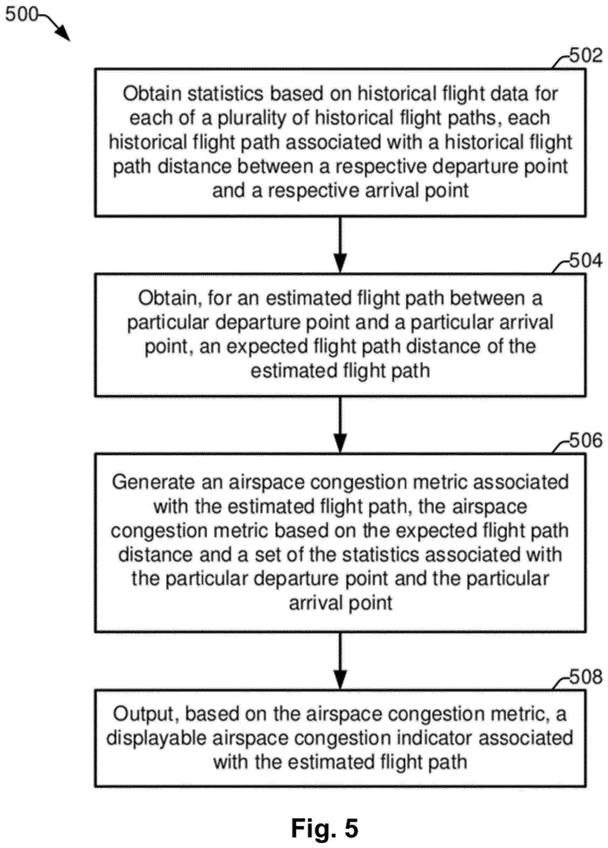

FIG. 5 is a flowchart that illustrates an example of a method 500 of monitoring, predicting, and visualizing airspace congestion. The method 500 can be initiated, performed, or controlled by one or more processors executing instructions, or by circuitry configured to cause performance of one or more operations, that resides within the airspace congestion monitoring system 102 of FIG. 1, the client device 120 of FIG. 1, or a combination thereof.

In some implementations, the method 500 includes, at block 502, obtaining statistics based on historical flight data for each of a plurality of historical flight paths. Each historical flight path is associated with a historical flight path distance between a respective departure point and a respective arrival point. For example, the statistics can include or correspond to the statistics 134 of FIG. 1, and the historical flight data can include or correspond to the historical flight data 130 of FIG. 1. Each historical flight path is associated with a historical flown distance between the respective departure point and the respective arrival point. In some implementations, the expected flown distance is associated with an aircraft type that is expected to traverse the estimated flight path, and the plurality of historical flight paths are associated with the aircraft type. To illustrate, the historical flight data can correspond to departure and arrival pairs, and optionally to aircraft type, such that historical flight data for a particular departure point and arrival point (and optionally a particular aircraft type) can be obtained to generate the statistics. The set of the statistics associated with the particular departure point and the particular arrival point can include an average flown distance of multiple historical flight paths between the particular departure point and the particular arrival point and a standard deviation of the multiple historical flight paths between the particular departure point and the particular arrival point.

The method 500 also includes, at block 504, obtaining, for an estimated flight path between a particular departure point and a particular arrival point, an expected flight path distance of the estimated flight path. For example, the expected flight path distance can include or correspond to the expected flown distance 132 of FIG. 1. The method 500 includes, at block 506, generating an airspace congestion metric associated with the estimated flight path. The airspace congestion metric is based on the expected flight path distance and a set of the statistics associated with the particular departure point and the particular arrival point. For example, the airspace congestion metric can include or correspond to the congestion metric 136 of FIG. 1.

The method 500 includes, at block 508, outputting, based on the airspace congestion metric, a displayable airspace congestion indicator associated with the estimated flight path. For example, the displayable airspace congestion indicator can include or correspond to the displayable indicator 138 of FIG. 1. In some implementations, the displayable airspace congestion indicator includes an alert that identifies the estimated flight path, an estimated flight plan associated with the estimated flight path, the particular departure point, the particular arrival point, or a combination thereof. An illustrative example of such an alert includes the alert 216 of FIG. 2.

In some implementations, the airspace congestion metric is determined during a flight of an aircraft along the estimated flight path to provide real-time or near real-time airspace congestion visualization. Additionally, or alternatively, the historical flight data can include surveillance data of air travel during one or more historical time periods, historical flight data obtained from one or more publicly available databases of global flight data, or a combination thereof.

In some implementations, the method 500 can include more, fewer, and/or different steps without departing from the scope of the subject disclosure. For example, the method 500 can also include comparing the airspace congestion metric to a threshold range and setting a characteristic of the displayable airspace congestion indicator to a first characteristic value based on the airspace congestion metric exceeding the threshold range. For example, the characteristic can be set to a first value based on the airspace congestion metric exceeding the threshold range, as described with reference to the third displayable indicator 210 of FIG. 2. In some such implementations, the method 500 also includes setting the characteristic of the displayable airspace congestion indicator to a second characteristic value based on the airspace congestion metric being within the threshold range. For example, the characteristic can be set to a second value based on the airspace congestion metric being within the threshold range, as described with reference to the second displayable indicator 208 of FIG. 2. In some such implementations, the method 500 further includes setting the characteristic of the displayable airspace congestion indicator to a third characteristic value based on the airspace congestion metric being less than the threshold range. For example, the characteristic can be set to a first value based on the airspace congestion metric being below the threshold range, as described with reference to the first displayable indicator 206 of FIG. 2.

In some implementations, the method 500 can further include determining a geographic region that includes a threshold number of estimated flight paths associated with respective airspace congestion metrics that satisfy a congestion threshold, the estimated flight paths including the estimated flight path. In such an example, the method 500 also includes outputting a GUI that includes a map and the displayable airspace congestion indicator that indicates the geographic region. For example, the geographic region can include or correspond to the geographic region associated with the first displayable indicator 406 in the GUI 400 of FIG. 4.

In some implementations, the method 500 can further include comparing the airspace congestion metric to a threshold and setting one or more characteristics of the displayable airspace congestion indicator based on whether the airspace congestion metric satisfies the threshold. In some such implementations, the one or more characteristics include color. For example, the displayable airspace congestion indicator has a first color based on the airspace congestion metric satisfying the threshold, and the displayable airspace congestion indicator has a second color based on the airspace congestion metric failing to satisfy the threshold. In some such implementations, the airspace congestion metric satisfies a second threshold that is less than the threshold, and a second displayable airspace congestion indicator that is based on a second airspace congestion metric associated with a second estimated flight path has a third color based on the second airspace congestion metric failing to satisfy the second threshold. Additionally, or alternatively, the method 500 can also include outputting a GUI that includes the displayable airspace congestion indicator overlaid on a map of one or more departure points and one or more arrival points. Examples of setting characteristics of displayable air congestion indicators are further described with reference to FIG. 2, and the GUI 200 of FIG. 2 can include the map portion 202 that the displayable indicators 206-210 are overlaid upon. In some such implementations, the one or more characteristics include a visibility status, the visibility status of the displayable airspace congestion indicator is set to visible based on the airspace congestion metric satisfying the threshold, and the visibility status of the displayable airspace congestion indicator is set to transparent based on the airspace congestion metric failing to satisfy the threshold.

In some implementations, the method 500 can further include receiving a query that indicates the estimated flight path, the particular departure point, the particular arrival point, or a combination thereof. In this example, the method 500 also includes generating the airspace congestion metric based on receipt of the query. An example of a GUI that displays a displayable indicator based on a query is described above with reference to the GUI 300 of FIG. 3.

The method described above with reference to FIG. 5 can be implemented to realize one or more of the technical advantages described in more detail above. For example, the method 500 can improve the accuracy and utility of airspace congestion predictions in addition to improving the speed and usability of such information to a user (e.g., an air traffic controller or pilot) through particular visualizations. For example, instead of analyzing airline carrier resource usage and demand, which can result in analytics that provide predicted changes to demand but do not monitor airspace congestion in real-time with sufficient accuracy, the airspace congestion metric generated by the method 500 is based on historical flight data from multiple regions (e.g., global flight and surveillance data) to provide accurate predictive capabilities for airspace congestion. The predicted airspace congestion is region and airline-carrier agnostic, increasing the accuracy and utility of the prediction to a human operator, such as a flight scheduler, an air traffic controller, or a pilot. The displayable indicator can be displayed, as part of a GUI, that enables a human operator to quickly and correctly interpret the underlying airspace congestion information, which can result in the operator taking actions that reduce, or eliminate, flight delays or shorten scheduled flights, which can save fuel and manpower resources associated with an airline carrier in addition to increasing passenger satisfaction. Additionally, the method 500 improves operations of a computer, at least by generating the airspace congestion metric and the displayable indicator faster and with less latency as compared to other central air navigation systems that are slower (e.g., have greater latency) due to more complicated processing to access private data from different airline carriers or providers and/or different regions.

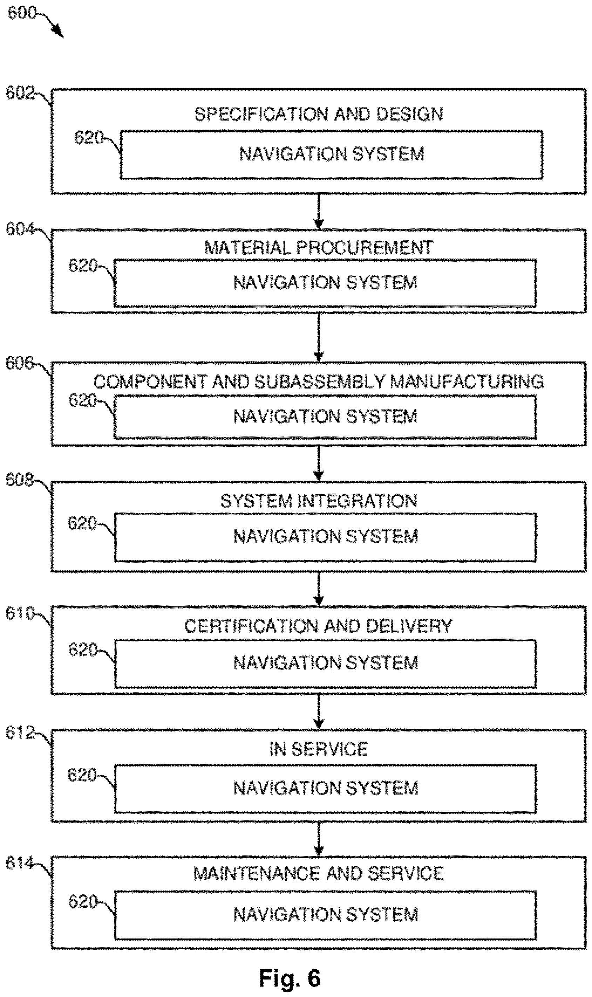

Referring to FIG. 6, a flowchart illustrative of an example of a life cycle of an aircraft that includes a navigation system 620 configured to enable monitoring, prediction, and visualization of airspace congestion is shown and designated as a method 600. During pre-production, the exemplary method 600 includes, at 602, specification and design of an aircraft. During specification and design of the aircraft, the method 600 can include specification and design of the navigation system 620 that is configured to support monitoring, prediction, and visualization of airspace congestion. The navigation system 620 may include one or more components of the system 100 of FIG. 1 (e.g., historical flight statistics engine 104, the airspace congestion engine 106, and/or the visualization engine 108) or may be configured to output or support the GUI 200 of FIG. 2, the GUI 300 of FIG. 3, and/or the GUI 400 of FIG. 4. At 604, the method 600 includes material procurement, which can include procuring materials for the navigation system 620.

During production, the method 600 includes, at 606, component and subassembly manufacturing and, at 608, system integration of the aircraft. For example, the method 600 can include component and subassembly manufacturing of the navigation system 620 and system integration of the navigation system 620. At 610, the method 600 includes certification and delivery of the aircraft and, at 612, placing the aircraft in service. Certification and delivery can include certification of the navigation system 620 to place the navigation system 620 in service. While in service by a customer, the aircraft can be scheduled for routine maintenance and service (which can also include modification, reconfiguration, refurbishment, and so on). At 614, the method 600 includes performing maintenance and service on the aircraft, which can include performing maintenance and service on the navigation system 620.

Each of the processes of the method 600 can be performed or carried out by a system integrator, a third party, and/or an operator (e.g., a customer). For the purposes of this description, a system integrator can include without limitation any number of aircraft manufacturers and majorsystem subcontractors; a third party can include without limitation any number of venders, subcontractors, and suppliers; and an operator can be an airline, leasing company, military entity, service organization, and so on.

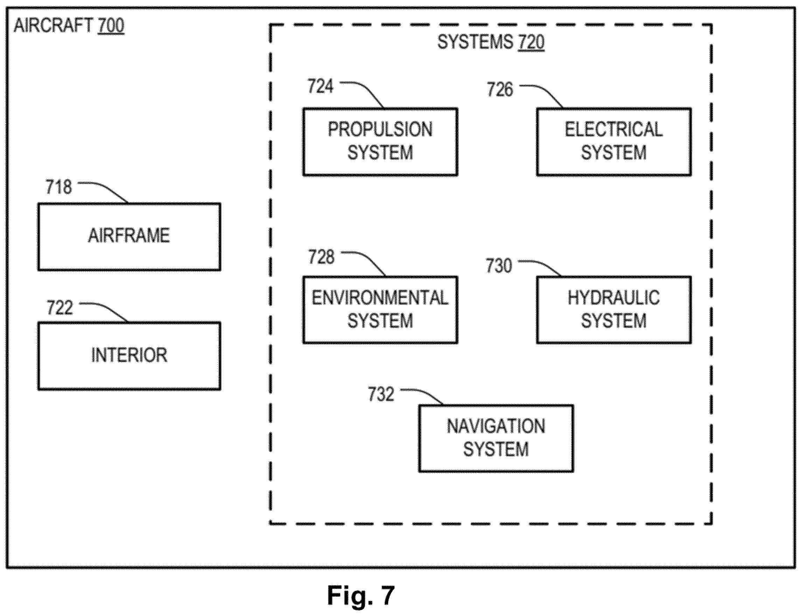

Aspects of the disclosure can be described in the context of an example of a vehicle. A particular example of a vehicle associated with the life cycle described with reference to FIG. 6 is an aircraft 700 as shown in FIG. 7. In the example of FIG. 7, the aircraft 700 includes an airframe 718 with a plurality of systems 720 and an interior 722. Examples of the plurality of systems 720 include one or more of a propulsion system 724, an electrical system 726, an environmental system 728, a hydraulic system 730, and a navigation system 732. Any number of other systems can be included and/or one or more of the systems depicted in FIG. 7 may be omitted. In the example of FIG. 7, the navigation system 732 is configured to support monitoring, prediction, and visualization of airspace congestion and can include or correspond to the system 100 of FIG. 1, or a portion thereof.

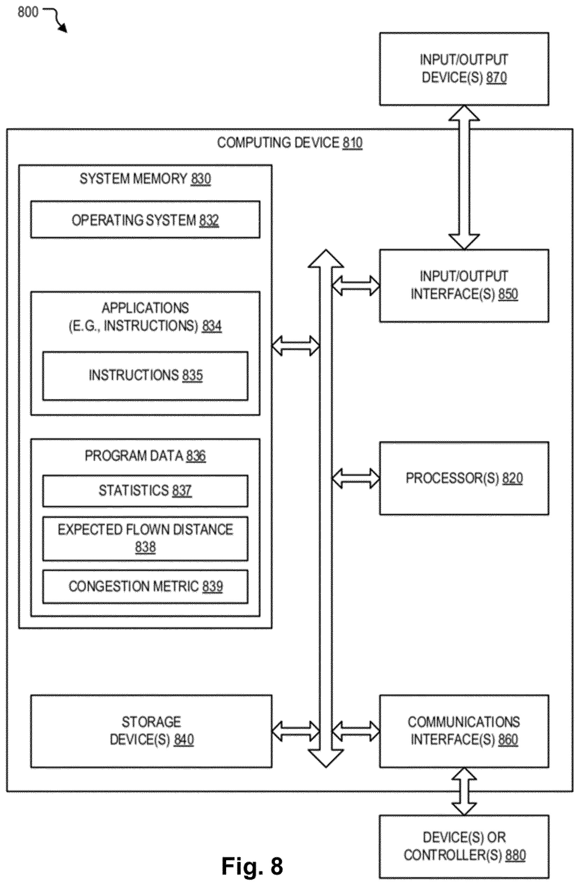

FIG. 8 is a block diagram of a computing environment 800 including a computing device 810 configured to support aspects of computer-implemented methods and computer-executable program instructions (or code) according to the present disclosure. For example, the computing device 810, or portions thereof, is configured to execute instructions to initiate, perform, or control one or more operations described with reference to FIGs. 1-7.

The computing device 810 includes one or more processors 820. The processor(s) 820 are configured to communicate with system memory 830, one or more storage devices 840, one or more input/output interfaces 850, one or more communications interfaces 860, or any combination thereof. The system memory 830 includes volatile memory devices (e.g., random access memory (RAM) devices), nonvolatile memory devices (e.g., read-only memory (ROM) devices, programmable read-only memory, and flash memory), or both. The system memory 830 stores an operating system 832, which can include a basic input/output system for booting the computing device 810 as well as a full operating system to enable the computing device 810 to interact with users, other programs, and other devices. The system memory 830 stores program data 836 (e.g., system data), statistics 837, an expected flown distance 838, a congestion metric 839, or a combination thereof. The statistics 837 can include or correspond to the statistics 134 generated by the historical flight statistics engine 104 of FIG. 1. The expected flown distance 838 can include or correspond to the expected flown distance 132 of FIG. 1. The congestion metric 839 can include or correspond to congestion metric 136 output by the visualization engine 108 of FIG. 1.

The system memory 830 includes one or more applications 834 (e.g., sets of instructions) executable by the processor(s) 820. As an example, the one or more applications 834 include instructions executable by the processor(s) 820 to initiate, control, or perform one or more operations described with reference to FIG. 1-7. To illustrate, the one or more applications 834 include instructions 835 executable by the processor(s) 820 to initiate, control, or perform one or more operations described with reference to the airspace congestion monitoring system 102 of FIG. 1, the client device 120 of FIG. 1, or a combination thereof.

In a particular implementation, the system memory 830 includes a non-transitory, computer readable medium storing instructions 835 that, when executed by the processor(s) 820, cause the processor(s) 820 to initiate, perform, or control operations to support monitoring, prediction, and visualization of airspace congestion. The operations include obtaining the statistics 837 based on historical flight data for each of a plurality of historical flight paths. Each historical flight path is associated with a historical flown distance between a respective departure point and a respective arrival point. The operations also include obtaining, for an estimated flight path between a particular departure point and a particular arrival point, the expected flown distance 838 of the estimated flight path. The operations include generating the congestion metric 839 associated with the estimated flight path. The congestion metric 839 is based on the expected flown distance and a set of the statistics associated with the particular departure point and the particular arrival point. The operations further include outputting, based on the congestion metric 839, a displayable airspace congestion indicator associated with the estimated flight path.

The one or more storage devices 840 include nonvolatile storage devices, such as magnetic disks, optical disks, or flash memory devices. In a particular example, the storage devices 840 include both removable and non-removable memory devices. The storage devices 840 are configured to store an operating system, images of operating systems, applications (e.g., one or more of the applications 834), and program data (e.g., the program data 836). In a particular aspect, the system memory 830, the storage devices 840, or both, include tangible (i.e., non-transitory) computer-readable media. In a particular aspect, one or more of the storage devices 840 are external to the computing device 810.

The one or more input/output interfaces 850 enable the computing device 810 to communicate with one or more input/output devices 870 to facilitate user interaction. For example, the one or more input/output interfaces 850 can include a display interface, an input interface, or both. For example, the input/output interface 850 is adapted to receive input from a user, to receive input from another computing device, or a combination thereof. In some implementations, the input/output interface 850 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 870 includes one or more user interface devices and displays, including some combination of buttons, keyboards, pointing devices, displays, speakers, microphones, touch screens, and other devices.

The processor(s) 820 are configured to communicate with devices or controllers 880 via the one or more communications interfaces 860. For example, the one or more communications interfaces 860 can include a network interface. The devices or controllers 880 can include, for example, devices that measure data associated with an aircraft, network devices, client devices, servers, cloud-based devices, one or more other devices, or any combination thereof.

In some implementations, a non-transitory, computer readable medium stores instructions that, when executed by one or more processors, cause the one or more processors to initiate, perform, or control operations to perform part or all of the functionality described above. For example, the instructions can be executable to implement one or more of the operations or methods of FIGs. 1-8. In some implementations, part or all of one or more of the operations or methods of FIGs. 1-8 can be implemented by one or more processors (e.g., one or more central processing units (CPUs), one or more graphics processing units (GPUs), one or more digital signal processors (DSPs), one or more field-programmable gate arrays (FPGAs), or one or more application-specific integrated circuits (ASICs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Aspects of the disclosure are described further with reference to the following set of interrelated examples:

According to Example 1, a device includes a memory; and one or more processors coupled to the memory and configured to: obtain statistics based on historical flight data for each of a plurality of historical flight paths, each historical flight path associated with a historical flown distance between a respective departure point and a respective arrival point; obtain, for an estimated flight path between a particular departure point and a particular arrival point, an expected flown distance of the estimated flight path; generate an airspace congestion metric associated with the estimated flight path, the airspace congestion metric based on the expected flown distance and a set of the statistics associated with the particular departure point and the particular arrival point; and output, based on the airspace congestion metric, a displayable airspace congestion indicator associated with the estimated flight path.

Example 2 includes the device of Example 1, wherein the airspace congestion metric is determined during a flight of an aircraft along the estimated flight path.

Example 3 includes the device of Example 1 or Example 2, wherein the expected flown distance is associated with an aircraft type that is expected to traverse the estimated flight path, and wherein the plurality of historical flight paths are associated with the aircraft type.

Example 4 includes the device of any of Examples 1 to 3, wherein the one or more processors are further configured to: compare the airspace congestion metric to a threshold; and set one or more characteristics of the displayable airspace congestion indicator based on whether the airspace congestion metric satisfies the threshold.

Example 5 includes the device of Example 4, wherein the one or more characteristics include color, wherein the displayable airspace congestion indicator has a first color based on the airspace congestion metric satisfying the threshold, and wherein the displayable airspace congestion indicator has a second color based on the airspace congestion metric failing to satisfy the threshold.

Example 6 includes the device of Example 5, wherein the airspace congestion metric satisfies a second threshold that is less than the threshold, and wherein a second displayable airspace congestion indicator that is based on a second airspace congestion metric associated with a second estimated flight path has a third color based on the second airspace congestion metric failing to satisfy the second threshold.

Example 7 includes the device of any of Examples 1 to 4, wherein the one or more processors are further configured to output a graphical user interface (GUI) that includes the displayable airspace congestion indicator overlaid on a map of one or more departure points and one or more arrival points, wherein the one or more characteristics include a visibility status, wherein the visibility status of the displayable airspace congestion indicator is set to visible based on the airspace congestion metric satisfying the threshold, and wherein the visibility status of the displayable airspace congestion indicator is set to transparent based on the airspace congestion metric failing to satisfy the threshold.

Example 8 includes the device of any of Examples 1 to 7, wherein the one or more processors are further configured to receive a query that indicates the estimated flight path, the particular departure point, the particular arrival point, or a combination thereof; and generate the airspace congestion metric based on receipt of the query.

Example 9 includes the device of any of Examples 1 to 8, wherein the one or more processors are further configured to determine an airspace congestion grouping that includes the particular departure point, the particular arrival point, a geographic region that includes at least a portion of the estimated flight path, or combinations thereof, wherein the displayable airspace congestion indicator identifies the airspace congestion grouping.

Example 10 includes the device of Example 9, wherein the displayable airspace congestion indicator includes an alert that identifies the airspace congestion grouping.

Example 11 includes the device of any of Examples 1 to 10, wherein the set of the statistics associated with the particular departure point and the particular arrival point include an average flown distance of multiple historical flight paths between the particular departure point and the particular arrival point and a standard deviation of the multiple historical flight paths between the particular departure point and the particular arrival point.

Example 12 includes the device of any of Examples 1 to 11, wherein the one or more processors are configured to obtain the historical flight data from one or more publicly available databases of global flight data.

According to Example 13, a method includes: obtaining, by one or more processors, statistics based on historical flight data for each of a plurality of historical flight paths, each historical flight path associated with a historical flown distance between a respective departure point and a respective arrival point; obtaining, by the one or more processors for an estimated flight path between a particular departure point and a particular arrival point, an expected flown distance of the estimated flight path; generating, by the one or more processors, an airspace congestion metric associated with the estimated flight path, the airspace congestion metric based on the expected flown distance and a set of the statistics associated with the particular departure point and the particular arrival point; and outputting, by the one or more processors based on the airspace congestion metric, a displayable airspace congestion indicator associated with the estimated flight path.

Example 14 includes the method of Example 13, wherein the displayable airspace congestion indicator includes an alert that identifies the estimated flight path, an estimated flight plan associated with the estimated flight path, the particular departure point, the particular arrival point, or a combination thereof.

Example 15 includes the method of Example 13 or Example 14 and further includes: comparing, by the one or more processors, the airspace congestion metric to a threshold range; and setting a characteristic of the displayable airspace congestion indicator to a first characteristic value based on the airspace congestion metric exceeding the threshold range.

Example 16 includes the method of Example 15 and further includes setting the characteristic of the displayable airspace congestion indicator to a second characteristic value based on the airspace congestion metric being within the threshold range.

Example 17 includes the method of Example 16 and further includes setting the characteristic of the displayable airspace congestion indicator to a third characteristic value based on the airspace congestion metric being less than the threshold range.

Example 18 includes the method of any of Examples 13 to 17, wherein the historical flight data includes surveillance data of air travel during one or more historical time periods.

According to Example 19, a non-transitory, computer readable medium stores instructions that, when executed by one or more processors, cause the one or more processors to perform operations including: obtaining statistics based on historical flight data for each of a plurality of historical flight paths, each historical flight path associated with a historical flown distance between a respective departure point and a respective arrival point; obtaining, for an estimated flight path between a particular departure point and a particular arrival point, an expected flown distance of the estimated flight path; generating an airspace congestion metric associated with the estimated flight path, the airspace congestion metric based on the expected flown distance and a set of the statistics associated with the particular departure point and the particular arrival point; and outputting, based on the airspace congestion metric, a displayable airspace congestion indicator associated with the estimated flight path.

Example 20 includes the non-transitory, computer readable medium of Example 19, wherein the operations further include: determining a geographic region that includes a threshold number of estimated flight paths associated with respective airspace congestion metrics that satisfy a congestion threshold, the estimated flight paths including the estimated flight path; and outputting a graphical user interface (GUI) that includes a map and the displayable airspace congestion indicator that indicates the geographic region.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

**Claims**

1. A device (102) comprising:

a memory; and
one or more processors coupled to the memory and configured to:

obtain statistics (134) based on historical flight data (130) for each of a plurality of historical flight paths, each historical flight path associated with a historical flown distance between a respective departure point and a respective arrival point;
obtain, for an estimated flight path between a particular departure point and a particular arrival point, an expected flown distance (132) of the estimated flight path;
generate an airspace congestion metric (136) associated with the estimated flight path, the airspace congestion metric (136) based on the expected flown distance (132) and a set of the statistics (134) associated with the particular departure point and the particular arrival point; and
output, based on the airspace congestion metric (136), a displayable airspace congestion indicator (138) associated with the estimated flight path.

2. The device of claim 1, wherein the airspace congestion metric (136) is determined during a flight of an aircraft along the estimated flight path.

3. The device of any one of claims 1 or 2, wherein the expected flown distance (132) is associated with an aircraft type that is expected to traverse the estimated flight path, and wherein the plurality of historical flight paths are associated with the aircraft type.

4. The device of any one of claims 1 to 3, wherein the one or more processors are further configured to:

compare the airspace congestion metric (136) to a threshold; and
set one or more characteristics of the displayable airspace congestion indicator (138, 206) based on whether the airspace congestion metric (136) satisfies the threshold.

5. The device of claim 4, wherein the one or more characteristics include color, wherein the displayable airspace congestion indicator (138, 206) has a first color based on the airspace congestion metric (136) satisfying the threshold, and wherein the displayable airspace congestion indicator (138, 206) has a second color based on the airspace congestion metric (136) failing to satisfy the threshold.

6. The device of claim 5, wherein the airspace congestion metric (136) satisfies a second threshold that is less than the threshold, and wherein a second displayable airspace congestion indicator (208) that is based on a second airspace congestion metric associated with a second estimated flight path has a third color based on the second airspace congestion metric failing to satisfy the second threshold.

7. The device of any one of claims 1 to 4, wherein the one or more processors are further configured to output a graphical user interface (GUI) (200) that includes the displayable airspace congestion indicator (138, 206) overlaid on a map (202) of one or more departure points and one or more arrival points, wherein the one or more characteristics include a visibility status, wherein the visibility status of the displayable airspace congestion indicator (138, 206) is set to visible based on the airspace congestion metric (136) satisfying the threshold, and wherein the visibility status of the displayable airspace congestion indicator (138, 206) is set to transparent based on the airspace congestion metric (136) failing to satisfy the threshold.

8. The device of any one of claims 1 to 7, wherein the one or more processors are further configured to:

receive a query (312) that indicates the estimated flight path, the particular departure point, the particular arrival point, or a combination thereof; and
generate the airspace congestion metric (136) based on receipt of the query (312).

9. The device of any one of claims 1 to 8, wherein the one or more processors are further configured to determine an airspace congestion grouping that includes the particular departure point, the particular arrival point, a geographic region that includes at least a portion of the estimated flight path, or combinations thereof, wherein the displayable airspace congestion indicator (138, 406) identifies the airspace congestion grouping.

10. The device of claim 9, wherein the displayable airspace congestion indicator (138) includes an alert (216) that identifies the airspace congestion grouping.

11. The device of any one of claims 1 to 10, wherein the set of the statistics (134) associated with the particular departure point and the particular arrival point include an average flown distance of multiple historical flight paths between the particular departure point and the particular arrival point and a standard deviation of the multiple historical flight paths between the particular departure point and the particular arrival point.

12. The device of any one of claims 1 to 11, wherein the one or more processors are configured to obtain the historical flight data (130) from one or more publicly available databases (110) of global flight data.

13. A method comprising:

    obtaining, by one or more processors, statistics (134) based on historical flight data (130) for each of a plurality of historical flight paths, each historical flight path associated with a historical flown distance between a respective departure point and a respective arrival point;
    obtaining, by the one or more processors for an estimated flight path between a particular departure point and a particular arrival point, an expected flown distance (132) of the estimated flight path;
    generating, by the one or more processors, an airspace congestion metric (136) associated with the estimated flight path, the airspace congestion metric (136) based on the expected flown distance (132) and a set of the statistics (134) associated with the particular departure point and the particular arrival point; and
    outputting, by the one or more processors based on the airspace congestion metric (136), a displayable airspace congestion indicator (138) associated with the estimated flight path.

14. The method of claim 13, wherein the displayable airspace congestion indicator (138) includes an alert (216) that identifies the estimated flight path, an estimated flight plan associated with the estimated flight path, the particular departure point, the particular arrival point, or a combination thereof.

15. A non-transitory, computer readable medium storing instructions that, when executed by one or more processors, cause the one or more processors to perform a method according to claim 13.

**Fig. 1**

EP 4 715 696 A1

**Fig. 2**

EP 4 715 696 A1

**Fig. 3**

**Fig. 4**

EP 4 715 696 A1

500

502

Obtain statistics based on historical flight data for each of a plurality of historical flight paths, each historical flight path associated with a historical flight path distance between a respective departure point and a respective arrival point

504

Obtain, for an estimated flight path between a particular departure point and a particular arrival point, an expected flight path distance of the estimated flight path

506

Generate an airspace congestion metric associated with the estimated flight path, the airspace congestion metric based on the expected flight path distance and a set of the statistics associated with the particular departure point and the particular arrival point

508

Output, based on the airspace congestion metric, a displayable airspace congestion indicator associated with the estimated flight path

**Fig. 5**

600

602 | SPECIFICATION AND DESIGN
620 | NAVIGATION SYSTEM

604 | MATERIAL PROCUREMENT
620 | NAVIGATION SYSTEM

606 | COMPONENT AND SUBASSEMBLY MANUFACTURING
620 | NAVIGATION SYSTEM

608 | SYSTEM INTEGRATION
620 | NAVIGATION SYSTEM

610 | CERTIFICATION AND DELIVERY
620 | NAVIGATION SYSTEM

612 | IN SERVICE
620 | NAVIGATION SYSTEM

614 | MAINTENANCE AND SERVICE
620 | NAVIGATION SYSTEM

**Fig. 6**

**Fig. 7**

800 ⟍

**COMPUTING DEVICE 810**

**SYSTEM MEMORY 830**

OPERATING SYSTEM 832

APPLICATIONS
(E.G., INSTRUCTIONS) 834

INSTRUCTIONS 835

PROGRAM DATA 836

STATISTICS 837

EXPECTED FLOWN DISTANCE 838

CONGESTION METRIC 839

STORAGE DEVICE(S) 840

INPUT/OUTPUT DEVICE(S) 870

INPUT/OUTPUT INTERFACE(S) 850

PROCESSOR(S) 820

COMMUNICATIONS INTERFACE(S) 860

DEVICE(S) OR CONTROLLER(S) 880

**Fig. 8**

| | Europäisches Patentamt |
|---|---|
| | European Patent Office |
| | Office européen des brevets |

# EUROPEAN SEARCH REPORT

**Application Number**

EP 24 38 2997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/004792 A1 (WISE GERALD BOWDEN [US] ET AL) 3 January 2008 (2008-01-03) * figures 1, 7 * * paragraphs [0033] - [0051], [0060] - [0066] * ----- | 1-15 | INV. G06Q10/047 G06Q50/40 |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 24 February 2025 | Abdel Jaber, Wael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 38 2997

This annex lists the patent family members relating to the patent documents cited in  the above-mentioned European search report.
The members are as contained in the European Patent Office EDP file on
The European Patent Office is in no way liable for these particulars which are merely given for the purpose of information.

24-02-2025

| Patent document cited in search report | Publication date | Patent family member(s) | Publication date |
|---|---|---|---|
| US 2008004792    A1 | 03-01-2008 | CN      101241564 A | 13-08-2008 |
| | | US       2008004792 A1 | 03-01-2008 |

EPO FORM P0459

For more details about this annex : see Official Journal of the European Patent Office, No. 12/82